# FASCICULE DE BREVET EUROPEEN

(11) **EP 0 628 256 B1**
(45) Date de publication et mention de la délivrance du brevet: **13.08.1997**
(21) Numéro de dépôt: 93109362.9
(22) Date de dépôt: 11.06.1993
(51) Int. Cl.: A23J 7/00, A23L 1/035, A23L 1/24

(54) **Composition permettant de stabiliser thermiquement les protéines et produit ainsi obtenu**
Zusammensetzung für Wärmestabilisierung von Proteinen und Produkt daraus
Thermally stabilizing composition for proteins and products therefrom

(43) Date de publication de la demande: 14.12.1994
(73) Titulaire: SOCIETE DES PRODUITS NESTLE S.A., 1800 Vevey (CH)
(72) Inventeur: Colarow, Ladislas, CH-1073 Savigny (CH); Dalan, Ernesto, CH-1807 Blonay (CH); Kusy, Andrej, CH-1055 Froideville (CH)
(74) Mandataire: Thomas, Alain

(56) Documents cités:
- EP-A- 0 171 995
- EP-A- 0 238 330
- EP-A- 0 319 064
- EP-A- 0 546 215
- PATENT ABSTRACTS OF JAPAN vol. 017, no. 270 26 Mai 1993 & JP-A-50 009 125 (NIHON SAAFUAKUTANTO KOUGIYOU KK) 19 Janvier 1993
- DATABASE WPI Week 8841, Derwent Publications Ltd., London, GB; AN 88-290542 & JP-A-63 214 144 (ASAHI DENKA KOGYO) 6 Septembre 1988
- CHEMICAL ABSTRACTS, vol. 93, no. 11, 1980, Columbus, Ohio, US; abstract no. 112505, page 574 ;

## Description

L'invention concerne une composition permettant de stabiliser thermiquement les protéines et des émulsions contenant des protéines. L'invention concerne en outre le produit stabilisé thermiquement.

Le jaune d'oeuf représente un émulsifiant naturel utilisé fréquemment pour la préparation de sauces et de mayonnaises. Cependant, son usage commercial dans des formulations alimentaires est limité en raison de sa coagulation à relativement basse température (65°C), ce qui conduit à une déstabilisation de l'émulsion huile dans eau suivie d'une forte exsudation d'huile. De ce fait, les compositions contenant du jaune d'oeuf naturel cassent, lorsqu'elles sont stérilisées ou lorsqu'on les chauffe à leur point d'ébullition.

Le brevet GB 1'525'929 concerne une émulsion eau dans huile contenant une phospholipoprotéine (par exemple du jaune d'oeuf) modifiée avec de la phospholipase A (PLA). Cette émulsion est stable si elle est traitée à 100°C pendant 30 min. Cependant le grand désavantage est que le jaune d'oeuf est modifié enzymatiquement et que l'élimination de toute activité de PLA par des protéases n'est pas possible, car l'enzyme protéolytique modifierait les protéines du jaune d'oeuf et la PLA seule ne peut être désactivée qu'à très haute température (160°C ). Le brevet EP 319 064 concerne également une émulsion eau dans huile contenant du jaune d'oeuf modifié avec de la PLA. Le brevet EP 171 995 concerne un aliment contenant de la farine modifiée avec de la PLA. Dans les deux cas, la PLA n'est pas désactivée et reste dans la masse.

La demande de brevet EP No. 91121318.9 déposée le 12.12.1991 par le demanderesse concerne une émulsion eau dans huile contenant un lysophospholipide (LPL) exogène provenant du soja. Le LPL est préparé à partir d'une fraction de lécithine ayant une teneur élevée en phosphatidylcholine (PC) qui est transformé sous l'action de la PLA en lysophosphatidylcholine (LPC). La PLA est ensuite désactivée par addition d'une protéase dont l'activité enzymatique est réduite par traitement thermique. L'inconvénient de cette solution est qu'elle nécessite l'utilisation d'une fraction de lécithine riche en PC de manière à obtenir un niveau suffisamment élevé de LPC. Or, d'une part, le coût d'une telle fraction est relativement élevé et d'autre part la procédure implique une étape supplémentaire d'inactivation de PLA. En plus la présence des acides gras libres dans le substrat hydrolysé enzymatiquement in situ peut apporter un goût au produit final.

Le brevet JP 50009125 décrit une dispersion de gelée royale dans l'eau contenant de la lysolécithine et de la pectine. Le but de ce brevet est d'obtenir une dispersion stable, mais sans aucune mention de stabilité thermique. Le brevet JP 63214144 concerne une émulsion huile dans eau contenant de la LPC et de la gomme de xanthane. Le but de ce brevet est d'obtenir une émulsion stable sans homogénéiser avec un bas pH et une teneur élevée en sel, mais cette émulsion ne contient pas de protéine.

Le but de la présente invention est de permettre de disposer d'une composition permettant de stabiliser thermiquement des protéines et qu'on puisse obtenir à partir de composés bon marché et directement disponibles sur le marché, sans avoir à effectuer un traitement enzymatique.

L'invention concerne une composition permettant de stabiliser thermiquement les protéines et des émulsions contenant des protéines, ladite composition contenant de la lysolécithine et un polymère de glucides choisi parmi la pectine, une gomme alimentaire et leur mélange.

Par protéines dans la présente description, on entend essentiellement des protéines du jaune d'oeuf.Par jaune d'oeuf, on entend tout type de jaune d'oeuf disponible dans le commerce par séparation du blanc d'oeuf, par exemple à partir des oeufs de poule, de caille ou d'autruche,ledit jaune d'oeuf étant seul ou stabilisé avec NaCl (8-10%) ou du sucrose (20%).

Par émulsion contenant des protéines, on entend toute émulsion huile-eau du domaine alimentaire, à savoir sauces, dressings, mayonnaises, produits pour alimentation entérale et crèmes. Par huile, il faut comprendre toute huile du domaine alimentaire, telle que l'huile de soja, l'huile de tournesol, l'huile de raisin, l'huile d'arachide, l'huile de maïs, l'huile de beurre et aussi la graisse de beurre. Dans la présente description, on inclut dans la définition des émulsions les poudres pouvant être reconstituées pour donner des émulsions, par exemple du lait en poudre ou de la mayonnaise en poudre. Finalement, on considère également comme émulsion un mélange de viande hachée permettant de préparer des hamburgers ainsi que la pâte à pizza.

Comme lysolécithine, on peut aussi bien utiliser de la lysolécithine fluide c'est-à-dire contenant entre 45 et 55% de lipides neutres ainsi que de la lysolécithine déshuilée, c'est-à-dire en poudre.

Dans la lysolécithine fluide, on a des lipides neutres et des lipides complexes, ces derniers étant représentés par différents phospholipides (PL), lyso-PL et phytoglycolipides. L'activité émulsifiante la plus forte est attribuée à la LPC qui est le phospholipide le plus hydrophile. La LPC, comme d'autres phospholipides, est active dans un large domaine de pH. De manière normale, la teneur en LPC dans une lysolécithine du commerce est comprise entre 100 et 500 µmol par gramme de cette lysolécithine, tandis que le rapport molaire de PC-LPC est compris entre 75:25 et 25:75, plus fréquemment de l'ordre de 50:50.

Toujours dans le cas de lysolécithine fluide,on envisage une composition, dans laquelle on a pour une part de pectine ou de gomme alimentaire entre 1 et 50 parts de lysolécithine. Toutes les données sont en poids. Le mélange est de préférence utilisé en phase aqueuse, avec une teneur en eau comprise entre 50 et 99% d'eau, de préférence de l'ordre de 90 %. Dans ce cas, on a par kilo de composition entre 1 et 100 mmole de LPC (on peut calculer cette teneur en poids, à partir du poids moléculaire de la LPC comme oleyl, à savoir 521,66).

Dans certaines applications, il est préférable d'utiliser de la lysolécithine en poudre. Dans ce cas, on utilise de la lysolécithine fluide qu'il faut déshuiler. La méthode la plus répandue consiste à précipiter les lipides complexes dans l'acétone, tandis que les lipides neutres solubles dans l'acétone sont rejetés. Une seconde possibilité est basée sur l'isolation de micelles de lipides complexes qui se forment spontanément dans l'hexane par adsorption en chromatographie liquide sur colonne (DE 2'915'614). Un procédé plus récent implique l'utilisation de membrane d'ultrafiltration résistant au solvant qui retient aussi les micelles de lipides complexes formés dans l'hexane tandis que les lipides neutres et les acides gras libres sont rejetés (US 4'240'914). La lysolécithine ainsi obtenue présente un profil olfactif plat sans goût amer.On a dans ce cas une teneur en LPC à peu prés double de celle pour la lysolécithine fluide (200 à 100 µmol par gramme). Pour déterminer les valeurs quantitatives de teneurs en PC et LPC, il y a lieu de suivre la méthode décrite par L. Colarow (1990) dans J. Planar Chromatography, 3, 228-231, Quantitaitve Transmittance Densitometry of Phospholipids After Their Specific Detection with a Molybdate Reagent on Silica Gel Plates.

La composition selon l'invention contient dans ce cas pour une part de polymère de glucides entre 3 et 10 parts de lysolécithine en poudre.

La gomme alimentaire utilisée est de préférence choisie parmi le xanthane, l'alginate, le carraghenane, la gomme arabique et l'adragante. On utilise de préférence le xanthane.

La présence de pectine est indispensable pour différentes raisons, notamment pour stabiliser certains phospholipides tels que le phosphatidylinositol et l'acide phosphatidique qui sont présents dans la lysolécithine à coté des constituants amenant la fonctionnalité émulsifiante, à savoir PC et LPC. La pectine utilisée est obtenue à partir d'écorces d'agrumes,estérifiée à entre 30 et 95%, de préférence entre 70 et 72 %.

Dans le cas de lysolécithine fluide, on prépare la composition en dissolvant la pectine dans l'eau entre 40 et 80°C et on y rajoute ensuite la lysolécithine fluide et on mélange. Cette composition peut alors être pasteurisée ou stérilisée.

Dans le cas de lysolécithine en poudre, on la dissout dans l'eau avec la pectine.On peut alors l'utiliser tel que en phase aqueuse, dans les mêmes teneurs que celles indiquées précédemment pour la lysolécithine en poudre, à savoir entre 1 et 100 mmole de LPC par kg de composition : on la pasteurise ou stérilise. On peut aussi ,après y avoir ajouter une maltodextrine, faire un séchage par pulvérisation ou autre de manière à obtenir une poudre, contenant entre 100 et 350 mmole de LPC par kg de poudre et entre 5 et 20 % de maltodextrine.

La présente invention concerne également les produits contenant des protéines qu'on a stabilisé thermiquement. Les protéines qu'on se propose en premier lieu de stabiliser sont les protéines du jaune d'oeuf, mais il est bien entendu que tout autre type de protéine peut aussi être stabilisée avec la composition selon l'invention.

L'invention concerne donc les produits choisis parmi la viande hachée, les sauces, la pâte à pizza, le lait en poudre, la mayonnaise, une crème et du jaune d'oeuf.

Dans le cas du jaune d'oeuf, on mélange comme indiqué ci-dessus la lysolécithine et la pectine et on ajoute à cette phase aqueuse du jaune d'oeuf contenant du sel ou du saccharose et on mélange ou homogénéise le tout. Dans ce cas, on prévoit pour 100 g de jaune d'oeuf entre 0,5 et 1,5 g de pectine et entre 10 et 20 g de lysolécithine fluide. Ce mélange à base d'oeuf est utilisable ensuite dans tout produit nécessitant du jaune d'oeuf et qu'on souhaite soumettre à un traitement thermique tel qu'un traitement UHT.

Dans le cas de la viande hachée, le but est de retarder la coagulation des protéines ainsi que l'exsudation de la phase liquide de manière à obtenir un transfert de chaleur uniforme lors de la cuisson. Dans ce cas, on mélange les ingrédients pour hamburgers (viande hachée,oignons,épices) à la composition avec lysolécithine fluide. Le mélange ainsi obtenu offre plusieurs possibilités d'utilisation. Il peut être cuit et consommé immédiatement, cuit et conservé par la congélation et réchauffé, ou bien conservé par la congélation et cuit dans un délai convenable pour le consommateur. Par kg de viande hachée, on prévoit entre 10et 50 g de lysolécithine fluide et entre 3 et 15 g de pectine.

Dans le cas de sauce, par exemple sauce hollandaise, c'est vraiment la protéine de l'oeuf qui est stabilisée thermiquement. On peut envisager des sauces avec un pH allant de 3 à 7. Le mode de préparation est normalement le suivant : on prépare comme indiqué ci-dessus un mélange lysolécithine, pectine et jaune d'oeuf et on effectue ensuite les mélanges avec les autres ingrédients de manière classique. Sur le produit final on a alors une teneur en pectine comprise entre 1 et 3 g et pour la lysolécithine (normalement en poudre) entre 3 et 20 g par kg de sauce.

Pour la pâte à pizza, comme pour la viande hachée on cherche plutôt à retarder la coagulation des protéines. On effectue la préparation en mélangeant la composition selon l'invention au mélange levure-farine-eau. On arrive à une teneur par kg de pâte comprise entre 10 et 50 g de lysolécithine et entre 2 et 10g de pectine.

Pour la mayonnaise , en particulier la mayonnaise en poudre, on opère de la manière suivante : on fait un premier mélange d'eau, de pectine (ou une autre gomme alimentaire), de lysolécithine fluide, de poudre de lait écrémé (ou de concentré de petit lait) et de jaune d'oeuf et un second mélange de blanc d'oeuf, de maltodextrine, d'amidon, de sel et d'épices. On réunit ces deux mélanges, on ajoute l'huile, on effectue une première homogénéisation, on stérilise, on refroidit, on fait une seconde homogénéisation et on fait un séchage par atomisation. Le produit obtenu contient entre 0,05 et 0,2 g de pectine et entre 0,1 et 4g de lysolécithine fluide pour 100 g de mayonnaise en poudre.

Dans le cas de crème, on homogénéise un mélange de concentré de petit lait, de lactosérum et d'eau et on y ajoute de la pectine, de la lysolécithine fluide, de l'huile de beurre, du sel, du jaune d'oeuf et de l'eau et on homogénéise le mélange ainsi obtenu. On obtient un produit ayant une teneur en pectine comprise entre 1 et 2 g et une teneur en lysolécithine fluide comprise entre 5 et 10 g par kg de crème.

Dans le cas du lait en poudre, on veut améliorer la mouillabilité et la miscibilité lors de la reconstitution.

On opère de la manière suivante : on fait un prémélange de lysolécithine fluide avec de la pectine et de l'eau à 80°C et on mélange avec du lait frais. On fait alors une pré concentration à 40 % de matière sèche et on termine par une pulvérisation dans l'Egron ou un autre système de séchage. Si on se base sur le lait frais de départ, il a une teneur comprise entre 100 et 1000 ppm de lysolécithine fluide et entre 20 et 200 ppm de pectine par litre de lait.

Il est bien entendu qu'on peut encore avoir d'autres utilisations possibles pour la composition selon l'invention, par exemple pour le lait concentré, le jaune d'oeuf en poudre entier ou en poudre aux propriétés émulsifiantes, les crêpes, les quiches, les mélanges d'antioxydants lipo- et hydrosolubles en poudre ou liquides et les émulsions pour la nutrition infantile à base de lipides, protéines de lait et protéines de lait hydrolysées.

L'invention concerne finalement une composition permettant de stabiliser des émulsions eau-huile, contenant de la lysolécithine, un composé choisi parmi la pectine et une gomme alimentaire et de l'huile. Lorsqu'on mélange ensuite cette composition avec de l'eau, on arrive à obtenir une émulsion stable sans aucun autre additif. Par huile, on entend toute huile animale ou végétale à base d'acylglycérols.

La teneur en lysolécithine fluide est comprise entre 20 et 200 mmole de LCP/kg de composition. La teneur en pectine est comprise entre 1 et 10 g/kg.

Pour montrer la présence de LPC dans les produits selon l'invention, on opère de la manière suivante : la totalité des lipides est extraite selon la méthode de Folch (voir article mentionné ci-dessus de L. Colarow) et ensuite séparée par chromatographie en couche mince et haute performance (HPTLC) dans leurs classes de phospholipides selon la méthode mentionnée ci-dessus publiée dans J. Planar Chromatography. Après détection avec un réactif non destructif de primuline, les classes de phospholipides sont visibles sous lumière UV à 366 nm. On peut alors quantifier la teneur en LPC.

Le dosage de polymères de glucides tels que la pectine et le xanthane ainsi que la détermination de leur composition sont mentionnés en détail dans la méthode officielle suivantes:

Amtliche Sammlung von Untersuchungsverfahren nach § 35 LMBG, Code L-00.00.13, November 1986

La suite de la description est faite en référence aux exemples suivants.

### EXEMPLE 1 : Préparation de lysolécithine deshuilée.

225 de gel de silice (taille 70 à 230 mesh) est activé à 165°C pendant 24 h. Après refroidissement, l'adsorbant chromatographique est mis en suspension dans l'hexane et chargé dans une colonne de verre de manière à avoir un volume de lit de environ 450 ml. De la lysolécithine commerciale (100 g) obtenue à partir du soja est mis en suspension dans l'hexane (300 ml) à 50 °C. La colonne est chargée complètement avec l'échantillon qui passe à travers l'adsorbant. L'élution des micelles de lipides complexes est complétée en ajoutant 300 ml d'hexane. L'éluat est concentré à sec sous vide. La poudre obtenue est balayée par un courant d'azote et représente 48,5 g et contient des PL, des LPL et des glycolipides . La concentration en LPC est de 303 µmol par g. La rétention des acides gras libres et les autres lipides neutres sur la colonne améliore sensiblement le profil olfactif et gustatif de la lysolécithine.

### EXAMPLE 2 : Jaune d'oeuf avec pectine.

500 mg de pectine provenant d'agrumes (citron), estérifié à 68-72% sont dissous dans 300 ml d'eau deionisée à 80 °C. La solution de pectine et le jaune d'oeuf (100 g) contenant 11% de NaCl sont mélangés à 40°C jusqu'à homogénéité et le pH de l'échantillon est ajusté à 4.8 en utilisant une solution d'acide acétique dans l'eau.L'échantillon est ensuite passé dans un homogénéisateur opérant à 400-800 bar et à 50 °C. D'autres échantillons ont été préparés contenant respectivement 1000, 1500, 2136 et 3560 mg de pectine. Des aliquotes de l'homogénéisat obtenu sont dilués à 100 ml avec de l'eau déionisée et testés quant à leur stabilité thermique dans de l'eau bouillante pendant 10 min. Tous les échantillons sont coagulés en 0.5 min.

### EXEMPLE 3 : Jaune d'oeuf avec lysolécithine fluide.

De la lysolécithine commerciale (5g) obtenue à partir de soja contenant 51,5 % de lipides neutres et 48,5% de lipides complexes tels que PC (146 µmol/g) et LPC (147 µmol/g) est dispersée dans de l'eau déionisée (300 ml) à 60°C. La dispersion est dégazée sous vide et mélangée avec 100 g de jaune d'oeuf salé pour ensuite être homogénéisée à pH de 4,8 comme dans l'exemple 2. On effectue la même chose avec la même quantité de jaune d'oeuf que précédemment mais avec 10, 15 et 20 g de lysolécithine fluide. On opère un test de stabilité thermique comme dans l'exemple précédent. Tous les échantillons sont coagulés en o,5 min.

### EXEMPLE 4 : Jaune d'oeuf avec pectine et lysolécithine fluide.

500 mg de pectine (exemple 2) sont dissous dans 150 ml d'eau déionisée à 80 °C. Cinq g de lysolécithine (exemple 3) sont dispersés dans 150 ml d'eau déionisée à 90°C. Les deux solutions sont combinées, portées à 50°C et mélangées avec 100g de jaune d'oeuf salé. L'acidité du mélange résultant est ajustée à pH 4,8 après quoi l'échantillon est homogénéisé comme déjà décrit ci-dessus . Le même procédé est répété pour des échantillons contenant des quantités variables de pectine et de lysolécithine comme indiqué sur le tableau ci-dessous.

| **PECTINE** | | **LYSO- LECITHINE FLUIDE** | | **EAU** | **JAUNE D'OEUF SALE** | **STABILITE THERMIQUE** |
|---|---|---|---|---|---|---|
| **mg** | **%/protéines jaune d'oeuf** | **g** | **mmols** | **g** | **g** | **minutes à 100°C** |
| 500 | 3,51 | 5,0 | 0,73 | 300 | 100 | 1,0 |
| 500 | 3,51 | 10,0 | 1,47 | 300 | 100 | 1,5 |
| 500 | 3,51 | 15,0 | 2,20 | 300 | 100 | >10 |
| 1000 | 7,02 | 15,0 | 2,20 | 300 | 100 | >10 |
| 1500 | 10,53 | 15,0 | 2,20 | 300 | 100 | >10 |
| 1500 | 10,53 | 20,0 | 2,93 | 300 | 100 | >10 |

On constate donc que dès une teneur en pectine de 500 mg et en lysolécithine de 15 g pour 100 g de jaune d'oeuf, on obtient une composition parfaitement stable thermiquement.

### EXEMPLE 5 : Stabilité thermique du jaune d'oeuf à pH 4,5-7.

5 ml aliquotes du jaune d'oeuf contenant 1000 et 1500 mg de pectine pour 15 g de lysolécithine (exemple 4) sont prélevés séparément et dilués dans 100 ml d'eau déionisé et le pH de chaque solution est ajusté à un pH respectivement de 4,5, 5, 5,5, 6,0, 6,5 et 6,9. Les tests de stabilité thermique effectués comme dans l'exemple 2 ne conduisent à aucune coagulation des échantillons.

### EXEMPLE 6 : Jaune d'oeuf avec pectine et lysolécithine déshuilée.

10 g de lysolécithine déshuilée (exemple 1 ) sont dispersés dans 150 ml d'eau déionisée (90°C ) tandis que 1000 mg de pectine sont dissous dans le même volume d'eau à 80 °C. Les solutions de pectine et de lysolécithine sont combinées, portées à 50°C et ajoutées à 100g de jaune d'oeuf salé. Le mélange est homogénéisé et le pH est ajusté à 4,8. On effectue le test de stabilité thermique comme dans l'exemple 2. On répète l'essai avec la même quantité de lysolécithine, mais sans pectine et avec 2000 mg de pectine. L'échantillon sans pectine ne permet pas de stabiliser le jaune d'oeuf : on arrive à la coagulation en moins de o,5 min. Les deux autres échantillons tiennent pendant plus de 10 min le test de stabilité thermique.

### EXEMPLE 7 : Jaune d'oeuf avec xanthane et lysolécithine déshuilée

20 g lysolécithine déshuilée (Exemple 1) sont dispersés dans 300 ml d'eau déionisée (90°C) tandis que 2000 et 3000 mg de xanthane sont dissous séparément dans 150 ml d'eau à 80°C. Les solutions de xanthane (150 ml) et de lysolécithine (150 ml) sont combinées, portées à 50°C et mélangées avec 100 g de jaune d'oeuf salé. On effectue le test de stabilité thermique comme dans l'exemple 2. Les deux échantillons tiennent plus de 10 min le test de stabilité thermique.

### EXEMPLE 8 : Sauce obtenue à partir de jaune d'oeuf traité.

6,742 g de lysolécithine déshuilée comme décrit dans l'exemple 1 sont dispersés dans 360 ml d'eau déionisée à 90° C. 674 mg de pectine sont dissous dans le même volume d'eau à 80°C. Les deux solutions sont combinées, portées à 50°C et ajoutées à 67,42 g de jaune d'oeuf contenant 11% de NaCl. 6,42 g supplémentaires de NaCl sont ajoutés au mélange qui est alors porté à homogénéité avec un agitateur magnétique et le pH est ajusté à 4,8 avec une solution aqueuse contenant 10 ml d'acide acétique pour 100 ml. Le procédé est répété avec 1348 et 2022 mg de pectine dissout dans 360 ml d'eau comme ci-dessus.Les trois échantillons sont alors homogénéisés comme décrit dans l'exemple 2. Ensuite la sauce est préparée à partir de l'oeuf ainsi obtenu de la manière suivante : 700 g d'oeuf contenant 674 mg de pectine sont mélangés avec 250 g de graisse de beurre, 15 g de saccharose, 27 g d'amidon, 2 g de gomme de xanthane et 5 g de glutamate de sodium et homogénéisés pendant 10 min à 50° C. L'acidité du mélange est réglée à pH 4,8 comme indiqué ci-dessus et la sauce est homogénéisée à nouveau à 50°C sous 180 bar.
Deux sauces supplémentaires ont été préparées comme ci-dessus avec des teneurs en pectine de 1348 et 2022 mg. Le test de stabilité thermique est explicité dans l'exemple suivant.

### EXEMPLE 9 : Test de stabilité thermique.

Cent g de sauce de l'exemple précédent sont placés dans un système micro-ondes de Siemens et soumis pendant 120 secondes au champ micro-ondes de 600 Watt. Les 3 sauces sont stables thermiquement, c-a-d ne donnent aucun signe de cassure de l'émulsion, à savoir exsudation d'huile, protéines coagulées ou séparation de phases.

### EXEMPLE 10 : Viande hachée.

On prépare des hamburgers à partir de 850 g de viande hachée, 150 g d'oignons, 20 g d'épices auxquels on ajoute le prémélange de 25 g de lysolécithine, 5 g de pectine dissous dans 70 g d'eau.
On prépare alors des hamburgers pesant environ 100 g. On constate qu'on arrive à les cuire uniformément, sans les brûler et que la perte d'eau n'est que de l'ordre de 20 à 25 % ( alors qu'elle est de l'ordre de 30-35% dans le cas d'un hamburger classique, qui est d'autre part brûlé et cuit seulement à 60-80%).

### EXEMPLE 11 : Pâte à pizza.

A partir de un kg de pâte à pizza obtenue de manière classique avec de la farine ,de l'eau, du sel et de la levure, on ajoute 20 g de lysolécithine et 5 g de pectine. On obtient une pâte d'une texture fine et bien aérée, ayant conservé, même après six mois de stockage à -20°C et un réchauffement, une bonne élasticité et fraîcheur, tandis que la pâte classique développe la texture typique du "biscuit".

### EXEMPLE 12 : Mayonnaise en poudre.

On mélange dans l'eau 160 g de pectine, 400 g de lysolécithine fluide, 6 kg de lait écrémé en poudre et 4 kg de jaune d'oeuf salé à 9%. On prépare un second mélange contenant 4 kg de blanc d'oeuf, 20 kg de maltodextrine, 2 kg d'amidon, 300 g de sel, 1 kg de concentré de citron et 250 g de glutamate.

On solubilise ce second mélange dans le premier et on ajuste le pH à 3,9 avec de l'acide acétique. On fait un préchauffage à 45°C et on ajoute 50 kg d'huile d'olive. On fait une première homogénéisation, on chauffe à 95°C pendant 5 sec. et on fait le seconde étape d'homogénéisation et on termine par le séchage par pulvérisation.

### EXEMPLE 13 : Crème.

On mélange 100 g de concentré de petit lait avec 50 g de lactoserum salé et 850 g d'eau et on homogénéise à 50 °C. On ajoute à cette crème 8 g de pectine, 40 g de lysolécithine fluide, 500 g d'huile de beurre, 50 g de NaCl, 200g de jaune d'oeuf salé et 3200 g d'eau ,on pasteurise la mélange obtenu à 85°C et on homogénéise à 50°C.

On obtient une crème qui est stable thermiquement, c-a-d qui tient pendant 3 min dans le même micro-onde que celui utilisé sous l'exemple 8.

### EXEMPLE 14 : Emulsifiant à base de poudre de jaune d'oeuf

De la lysolécithine (500g) et 150 g de pectine (ou alternativement, 150 g de xanthane) sont dissous dans 5.0 lt d'eau à 80°C et la solution est amenée à 50°C pour être mélangée avec 5 kg de jaune d'oeuf pasteurisé et sans adjonction de NaCl. Le mélange est ensuite séché dans l'atomiseur. On obtient une poudre fine qui se disperse facilement dans l'eau et y reste en suspension. Ce jaune d'oeuf reconstitué ne coagule pas pendant plus de 10 min à 100°C tandis que le jaune d'oeuf reconstitué à partir d'une poudre commerciale ne reste pas en suspension et coagule en moins de 0.5 min.

### EXEMPLE 15 : Emulsion

On mélange 70% d'une phase lipidique (95% de MCT = Medium Chain Triglycéride et 5% d'extrait de romarin) avec 29,6 % de lysolécithine fluide et 0,4% de pectine.On prend 10% de cette composition qu'on mélange avec 90% d'eau et on obtient une émulsion parfaitement stable.

## Revendications

1. Composition permettant de stabiliser thermiquement les protéines et des émulsions contenant des protéines, caractérisée en ce qu'elle contient de la lysolécithine et un polymère de glucides choisi parmi la pectine, une gomme alimentaire et leur mélange, la dite composition contenant pour 1 part de polymère de glucides entre 1 et 50 parts de lysolécithine fluide ou pour 1 part de polymère de glucides entre 3 et 10 parts de lysolécithine en poudre, en excluant la présence de phospholipase A (PLA).

2. Composition selon la revendication 1, caractérisé en ce qu'elle contient entre 50 et 99% d'eau.

3. Composition selon la revendication 1, caractérisée en ce qu'elle se présente sous forme de poudre.

4. Composition selon l'une des revendications 1 à 3, caractérisée en ce qu'elle contient entre 1 et 350 mmole de lysophosphatidylcholine/kg.

5. Composition selon l'une des revendications 1 à 4, caractérisée en ce que la gomme alimentaire est choisie parmi le xanthane, l'alginate, le carraghenate, la gomme arabique et l'adragante.

6. Composition selon l'une des revendications 1 à 5, caractérisée en ce que la pectine a un degré d'estérification compris entre 70 et 72%.

7. Produit contenant un aliment à base des protéines stabilisées thermiquement et la composition selon la revendication 1, caractérisé en ce que le dit aliment est choisi parmi la viande hachée, une sauce, de la pâte à pizza, du lait en poudre, de la mayonnaise, une crème, du jaune d'oeuf et du lait frais, dans le cas où le lait frais est choisi, la composition contenant entre 100 et 1000 ppm de lysolécithine fluide et entre 20 et 200 ppm de pectine par litre de lait frais.

8. Produit selon la revendication 7, caractérisé en ce que c'est une sauce contenant entre 1 et 3 g de pectine et entre 3 et 20 g de lysolécithine en poudre par kg.

9. Produit selon la revendication 7, caractérisé en ce que c'est de la viande hachée contenant entre 10 et 50 g de lysolécithine fluide et entre 3 et 15 g de pectine par kg.

10. Produit selon la revendication 7, caractérisé en ce que c'est de la pâte à pizza contenant entre 10 et 50 g de lysolécithine et entre 2 et 10 g de pectine par kg de pâte.

11. Produit selon la revendication 7, caractérisé en ce que c'est du lait frais contenant entre 100 et 1000 ppm de lysolécithine fluide et entre 20 et 200 ppm de pectine par litre de lait frais.

12. Produit selon la revendication 7, caractérisé en ce que c'est de la mayonnaise contenant entre 0,05 et 0,2 g de pectine et entre 0,1 et 4 g de lysolécithine fluide pour 100 g de mayonnaise.

13. Produit selon la revendication 7, caractérisé en ce que c'est de la crème contenant entre 1 et 2 g de pectine et entre 5 et 10 g de lysolécithine fluide par kg de crème.

14. Produit selon la revendication 7, caractérisé en ce que c'est du jaune d'oeuf contenant entre 0,5 et 1,5 g de pectine et entre 10 et 20 g de lysolécithine fluide pour 100 g.

## Claims

1. Heat stabilizing composition for proteins and protein-containing emulsions, characterized in that it contains lysolecithin and a polymer of glucides selected from pectin, a food-quality gum and a mixture thereof, the said composition containing between 1 and 50 parts of fluid lysolecithin to 1 part of glucide polymer or between 3 and 10 parts of powdered lysolecithin to 1 part of glucide polymer, excluding the presence of phospholipase A (PLA).

2. Composition according to claim 1, characterized in that it contains between 50 and 99 % water.

3. Composition according to claim 1, characterized in that it is in powder form.

4. Composition according to one of claims 1 to 3, characterized in that it contains between 1 and 350 mmol of lysophosphatidylcholine/kg.

5. Composition according to one of claims 1 to 4, characterized in that the food-quality gum is selected from xanthan, alginate, carrageenate, gum arabic and tragacanth.

6. Composition according to one of claims 1 to 5, characterized in that the pectin has a degree of esterification of between 70 and 72 %.

7. Product containing a foodstuff based on heat stabilized proteins and the composition according to claim 1, characterized in that the said foodstuff is selected from minced meat, a sauce, pizza dough, milk powder, mayonnaise, a cream, egg yolk and fresh milk, in the case where fresh milk is selected, the composition containing between 100 and 1000 ppm of fluid lysolecithin and between 20 and 200 ppm of pectin per litre of fresh milk.

8. Product according to claim 7, characterized in that it is a sauce containing between 1 and 3 g of pectin and between 3 and 20 g of powdered lysolecithin per kg.

9. Product according to claim 7, characterized in that it is minced meat containing between 10 and 50 g of fluid lysolecithin and between 3 and 15 g of pectin per kg.

10. Product according to claim 7, characterized in that it is pizza dough containing between 10 and 50 g of lysolecithin and between 2 and 10 g of pectin per kg of dough.

11. Product according to claim 7, characterized in that it is fresh milk containing between 100 and 1000 ppm of fluid lysolecithin and between 20 and 200 ppm of pectin per litre of fresh milk.

12. Product according to claim 7, characterized in that it is mayonnaise containing between 0.05 and 0.2 g of pectin and between 0.1 and 4 g of fluid lysolecithin per 100 g of mayonnaise.

13. Product according to claim 7, characterized in that it is cream containing between 1 and 2 g of pectin and between 5 and 10 g of fluid lysolecithin per kg of cream.

14. Product according to claim 7, characterized in that it is egg yolk containing between 0.5 and 1.5 g of pectin and between 10 and 20 g of fluid lysolecithin per 100 g.

## Patentansprüche

1. Zusammensetzung zur Wärmestabilisierung von Proteinen und Proteine enthaltenden Emulsionen, dadurch gekennzeichnet, daß sie Lysolecithin und ein polymeres Kohlenhydrat enthält, das aus Pektin, einem Nahrungsmittelgummi und deren Mischung ausgewählt ist, wobei diese Zusammensetzung auf 1 Teil polymeres Kohlenhydrat 1 bis 50 Teile flüssiges Lysolecithin oder auf 1 Teil polymeres Kohlenhydrat 3 bis 10 Teile pulverförmiges Lysolecithin enthält, wobei die Anwesenheit von Phospholipase A (PLA) ausgeschlossen ist.

2. Zusammensetzung nach Anspruch 1, dadurch gekennzeichnet, daß sie 50 bis 99 % Wasser enthält.

3. Zusammensetzung nach Anspruch 1, dadurch gekennzeichnet, daß sie in Pulverform vorliegt.

4. Zusammensetzung nach einem der Ansprüche 1 bis 3, dadurch gekennzeichnet, daß sie 1 bis 350 mMol Lysophosphatidylcholin/kg enthält.

5. Zusammensetzung nach einem der Ansprüche 1 bis 4, dadurch gekennzeichnet, daß der Nahrungsmittelgummi aus Xanthan, Alginat, Carrageenat, Gummi arabicum und Tragantgummi ausgewählt ist.

6. Zusammensetzung nach einem der Ansprüche 1 bis 5, dadurch gekennzeichnet, daß das Pektin einen Veresterungsgrad von 70 bis 72 % hat.

7. Produkt, das ein Nahrungsmittel auf der Basis von wärmestabilisierten Proteinen und die Zusammensetzung nach Anspruch 1 enthält, dadurch gekennzeichnet, daß dieses Nahrungsmittel ausgewählt ist aus Hackfleisch, Sauce, Pizzateig, Pulvermilch, Mayonnaise, Creme, Eigelb und Frischmilch, wobei die Zusammensetzung im Fall von Frischmilch 100 bis 1000 ppm flüssiges Lysolecithin und 20 bis 200 ppm Pektin pro Liter Frischmilch enthält.

8. Produkt nach Anspruch 7, dadurch gekennzeichnet, daß es eine Sauce ist, die 1 bis 3 g Pektin und 3 bis 20 g pulverförmiges Lysolecithin pro kg enthält.

9. Produkt nach Anspruch 7, dadurch gekennzeichnet, daß es Hackfleisch ist, das 10 bis 50 g flüssiges Lysolecithin und 3 bis 15 g Pektin pro kg enthält.

10. Produkt nach Anspruch 7, dadurch gekennzeichnet, daß es Pizzateig ist, der 10 bis 50 g Lysolecithin und 2 bis 10 g Pektin pro kg Teig enthält.

11. Produkt nach Anspruch 7, dadurch gekennzeichnet, daß es Frischmilch ist, die 100 bis 1000 ppm flüssiges Lysolecithin und 20 bis 200 ppm Pektin pro Liter Frischmilch enthält.

12. Produkt nach Anspruch 7, dadurch gekennzeichnet, daß es Mayonnaise ist, die 0,05 bis 0,02 g Pektin und 0,1 bis 4 g flüssiges Lysolecithin auf 100 g Mayonnaise enthält.

13. Produkt nach Anspruch 7, dadurch gekennzeichnet, daß es Creme ist, die 1 bis 2 g Pektin und 5 bis 10 g flüssiges Lysolecithin pro kg Creme enthält.

14. Produkt nach Anspruch 7, dadurch gekennzeichnet, daß es Eigelb ist, das 0,5 bis 1,5 g Pektin und 10 bis 20 g flüssiges Lysolecithin auf 100 g enthält.
